# FASCICULE DE BREVET EUROPEEN

(11) **EP 3 867 805 B1**
(45) Date de publication et mention de la délivrance du brevet: **24.12.2025**
(21) Numéro de dépôt: 19816373.5
(22) Date de dépôt: 18.10.2019
(51) Int. Cl.: G06V 20/54

(54) **DISPOSITIF ET PROCÉDÉ DE DÉTECTION ET D'IDENTIFICATION D'UNE ENTITÉ VIVANTE OU NON**
VORRICHTUNG UND VERFAHREN ZUR DETEKTION UND IDENTIFIZIERUNG EINER LEBENDEN ODER NICHTLEBENDEN ENTITÄT
DEVICE AND METHOD FOR DETECTING AND IDENTIFYING A LIVING OR NON-LIVING ENTITY

(30) Priorité: 19.10.2018 US 201862747726 P
(43) Date de publication de la demande: 25.08.2021
(73) Titulaire: Prodose, 31100 Toulouse (FR); Boukari, Morou, 31100 Toulouse (FR)
(72) Inventeur: BOUKARI, Morou, 31400 TOULOUSE (FR)
(86) Numéro de dépôt international: PCT/FR2019/052485
(87) Numéro de publication internationale: WO 2020/079382

(56) Documents cités:
- CHAI K. TOH ET AL: "Wireless digital traffic signs of the future", IET NETWORKS, vol. 8, no. 1, 4 October 2018 (2018-10-04), Michael Faraday House, Six Hills Way, Stevenage, Herts. SG1 2AY, UK, pages 74 - 78, XP055657202, ISSN: 2047-4954, DOI: 10.1049/iet-net.2018.5127

## Description

### DOMAINE D'APPLICATION DE L'INVENTION

L'invention a trait à l'amélioration de la détection, de l'identification, de la détection du mouvement d'une entité (objet ou être vivant) par un dispositif.

### DESCRIPTION DE L'ART ANTÉRIEUR

Actuellement, il existe plusieurs modes de détection et de reconnaissance des objets :
- La détection et la reconnaissance directe par vision humaine (vision directe par l'œil humain nu, reconnaissance par les fonctions cérébrales de l'être humain),
- La détection et la reconnaissance par vision par un moyen technique de prise d'information tel un capteur associé à un moyen de traitement de l'information tel un ordinateur (utilisation des radars, des lidars, des caméras, des capteurs ultrasons, des puces de type radio-étiquettes de type RFID associés à des ordinateurs puissants munis d'algorithme de traitement des données).

Ces modes de détection présentent plusieurs inconvénients.

Ainsi, par exemple en ce qui concerne la détection et la reconnaissance directe par vision humaine, il est Impossible de détecter, de voir, de reconnaître et d'identifier les objets à l'œil nu lorsque ces objets sont situés très loin et/ou lorsque le temps est très mauvais (brouillard, pluie, nuit).

En ce qui concerne, la détection et la reconnaissance par moyen technique associé à un ordinateur, il est connu que
- les radars ne peuvent pas discerner les couleurs et les contours,
- les capteurs ultrasons ont une portée très faible (inférieure à dix mètres),
- les lidars ont une insensibilité aux couleurs et peuvent être perturbés par le mauvais temps (pluie, neige, brouillard épais),
- les puces RFID ont une portée très faible (inférieure à deux cents mètres),
- les caméras ont une grande sensibilité aux intempéries (pluie, neige, brouillard épais, luminosité),

Les algorithmes de reconnaissance associés au système de traitement de l'information ne sont pas complètement fiables et nécessitent d'être entraînés d'abord avec de très grandes quantités de données et nécessitent des calculateurs de très grandes puissances.

De plus, lorsqu'ils sont visibles, les objets à reconnaître et à identifier présentent eux-mêmes de nombreux inconvénients.

C'est le cas par exemple des objets supportant un message publicitaire (tels les panneaux et écrans publicitaires, les pré-enseignes et enseignes publicitaires) qui provoquent des pollutions visuelles des villes, des villages et des routes, ce qui a entraîné leur interdiction ou leur limitation en taille ou en nombre à l'entrée ou à l'intérieur des villes et villages et leur implantation sur des immeubles et bâtiments.

Un autre inconvénient des panneaux et écrans publicitaires, des pré-enseignes et enseignes publicitaires est l'impossibilité de voir ces panneaux et enseignes publicitaires par les passagers qui sont situés à l'arrière des engins roulants.

CHAI K. TOH ET AL: "Wireless digital traffic signs of the future",IET NETWORKS, vol. 8, no. 1, 4 octobre 2018 (2018-10-04), pages 74-78, Michael Faraday House, Six Hills Way, Stevenage, Herts. SG1 2AY, UK, ISSN: 2047-4954, DOI: 10.1049/iet-net.2018.5127, décrit une architecture hardware et software permettant de remplacer des panneaux de signalisation physiques existants par des panneaux de signalisation numérique sans fil.

### BREVE DESCRIPTION DE L'INVENTION

Ce que constatant, les demandeurs ont mené des recherches visant à faciliter la détection et l'identification d'une entité (être vivant ou objet) afin de résoudre les inconvénients de l'art antérieur.

Ces recherches ont abouti à la conception d'un dispositif et d'un procédé assurant la transformation de ces entités en objet détectable pour faciliter leur détection, leur reconnaissance, et leur identification de façon à optimiser
- l'exploitation des informations de leur reconnaissance à des fins de leur affichage sur des écrans digitaux (fixes ou mobiles), ou
- l'utilisation des informations de leur identification et reconnaissance pour le pilotage et le guidage d'engins semi-autonomes (roulants ou volants) ou d'engins autonomes (roulants ou volants), ou
- l'utilisation des informations de leur identification et reconnaissance afin de connaître les possibilités de mouvements de l'entité lorsqu'elle est mobile.

Selon l'invention, le dispositif de détection et d'identification d'une entité vivante ou non est défini selon la revendication indépendante 9.

Des exemples d'entités réelles (avec pour certaines des exemples d'informations associées) à détecter sont énumérés de façon non exhaustive dans la liste suivante : Entités vivantes :
- êtres humains
   ∘ Homme + (enfant, adulte, vieux)
   ∘ Femme + (enfant, adulte, vieux)
- Animaux
   ∘ Chiens + race
   ∘ Chats
   ∘ Vaches
   ∘ Moutons
   ∘ etc...

Entités non vivantes :
∘ Vélo
∘ Moto+ marque de moto
∘ Voiture + marque de voiture + dimensions
∘ Autres engins roulants + dimensions
∘ Avions + type d'avion + dimensions
∘ Train + type de train + dimensions
∘ Autres engins volants + dimensions
∘ Bâtiments
∘ Commerce
∘ Immeubles
∘ Trottoirs
∘ Panneaux de signalisation routière + type de panneaux
∘ Enseignes publicitaires + leurs contenus
∘ Panneaux publicitaires + leurs contenus
∘ Pré-enseignes publicitaires+ leurs contenus
∘ Passages à piétons.

Comme le boîtier entité réelle émet en boucle, il émet des données autres que visuelles susceptibles d'être détectées pour pouvoir détecter l'entité réelle associée et l'identifier.

Il n'est plus nécessaire de voir l'entité pour la détecter et l'identifier. De plus, il n'est pas nécessaire de mettre en œuvre des moyens de détection très sophistiqués puisque l'entité émet.

Le dispositif de l'invention résout donc les inconvénients de l'art antérieur.

Les informations ou attributs de l'entité diffusés par le dispositif peuvent être de plusieurs types. Selon un mode de réalisation préféré, une liste non exhaustive desdits attributs est fournie ci-dessous : type de l'entité, nature de l'entité, nom de l'entité, contenu de l'entité, dimensions de l'entité, possibilités de mouvements de l'entité.

Le terme broadcast est connu et désigne une diffusion unidirectionnelle vers plusieurs utilisateurs ici des modules de détection sans limitation quant au nombre.

Selon une autre caractéristique particulièrement avantageuse, la diffusion est une télédiffusion.

Selon une autre caractéristique particulièrement avantageuse de l'invention, la diffusion est une radiodiffusion des enregistrements sonores de la description audio de l'entité et des informations associées à l'identité de l'entité réelle à détecter.

La description audio fait alors partie des informations ou attributs associés à l'entité.

La radiodiffusion requiert moins d'énergie et une bande de diffusion moins large qu'une télédiffusion.

Selon une autre caractéristique particulièrement avantageuse de l'invention, les informations ou attribut diffusés de l'entité comprennent la position, l'orientation, le sens de déplacement et la vitesse de déplacement de l'entité.

Ces informations peuvent être diffusées de façon sonore.

Selon une autre caractéristique particulièrement avantageuse de l'invention, le moyen de stockage et/ou d'enregistrement et de stockage a des capacités pouvant aller de 0.1Mo à plus d'10 To.

Selon une autre caractéristique particulièrement avantageuse de l'invention, le moyen d'alimentation est rechargeable.

Selon une autre caractéristique particulièrement avantageuse de l'invention, le moyen d'alimentation électrique est relié à des moyens externes de charge de type panneaux solaire, éolienne, champ magnétique, piézoélectrique ou à un réseau électrique,

Selon une autre caractéristique particulièrement avantageuse de l'invention, les moyens de réception à distance vont de 500 m jusqu'à 100 000 km. Ils sont mis en oeuvre par liaison sans fil numérique ou par liaison filaire.

Selon une autre caractéristique particulièrement avantageuse de l'invention, le dispositif comprend des moyens de transformation de l'image réelle de l'entité en une image virtuelle.

Une telle caractéristique permet notamment de garder la confidentialité de l'image visuelle réelle de l'entité.

Selon une autre caractéristique particulièrement avantageuse de l'invention, la boucle de télédiffusion et/ou radiodiffusion est faite à des fréquences allant de 1 seconde à 120 secondes sur de très longues distances au-delà de 500 m jusqu'à 20000 m, laquelle télédiffusion et/ou radiodiffusion peut se faire à débit de 100 Ko/s jusqu'à plus de 10 Go/s.

Selon une autre caractéristique particulièrement avantageuse de l'invention, les modules de détection sont incorporés ou intégrés dans des engins roulants et volants, dans des engins roulants et volants autonomes ou semi-autonomes, dans des ordinateurs portables de type PC et smartphone ou sont portés par les êtres humains.

Selon une autre caractéristique particulièrement avantageuse de l'invention, les moyens de détection de la position exacte de l'objet, de l'orientation de l'objet, du sens de déplacement de l'objet et la vitesse de déplacement de l'objet sont constitués de capteurs GPS, de capteurs inertiels et gyroscopiques et d'accéléromètres.

On comprend alors qu'une entité de type panneau publicitaire peut se décomposer entre le moyen technique supportant le message publicitaire et le message supporté. L'invention permet de transformer le moyen technique supportant le message publicitaire en un simple poteau ou même être remplacé ou mis en œuvre par une autre entité tel un arbre qui serviront de moyen de support au boîtier entité réelle diffusant le message publicitaire.

Une telle solution conduit à l'élimination de la pollution visuelle liée à l'implantation des panneaux publicitaires, de pré-enseignes ou d'enseignes publicitaires à l'entrée ou à l'intérieur des villes et villages ou le long des routes terrestres et ferroviaires.

Il en est de même pour les panneaux de signalisation routière.

Le module de détection et/ou le boîtier entité réelle peuvent être intégrés à des sacs à dos, à des sacs à main, à des valises, à des casques vélos et motos en vu de leur utilisation par les êtres humains.

Le module de détection et/ou le boîtier entité réelle peuvent avoir comme base technique un smartphone (téléphone portable) modifié pour la mise en œuvre des nouvelles fonctions du dispositif gérées par exemple une application dédiée, téléphone portable avec lequel seront compatibles les programmes de conduites des véhicules roulants et les programmes de sécurité de ces véhicules.

Selon une autre caractéristique, le module de détection et/ou le boîtier entité réelle sont constitués par un smartphone (téléphone portable) modifié pour la mise en œuvre des nouvelles fonctions du dispositif gérées par exemple une application dédiée, téléphone portable avec lequel seront compatibles les programmes de conduites des véhicules roulants et les programmes de sécurité de ces véhicules.

Dans le cadre du guidage, de l'autoguidage et de pilotage d'engins autonomes ou semi-autonomes, les informations reçus par le module de détection de la part du dispositif dit objet réel permettent d'agir sur les commandes des engins (direction, accélération, freinage).

Selon une autre caractéristique particulièrement avantageuse de l'invention, le boîtier entité réelle comprend des moyens permettant de détecter la position exacte, l'orientation, le sens de déplacement et la vitesse de déplacement de l'entité.

Selon une autre caractéristique particulièrement avantageuse de l'invention, le module de détection comprend un chronomètre permettant de déterminer la durée de connexion du module de détection de détection au boîtier entité réelle.

Selon une autre caractéristique particulièrement avantageuse de l'invention, les moyens de traitement des données du module de détection communiquent avec des systèmes de guidage et de pilotage d'engins volants et roulants.

Un autre objet de l'invention est un procédé de détection et d'identification d'une entité vivante ou non défini selon la revendication indépendante 1.

Dans le cadre de la transformation de l'entité réelle (cas des panneaux publicitaires, des enseignes et pré-enseignes) par substitution totale, le procédé consiste à remplacer l'entité réelle par un autre objet réel de type par exemple arbre naturel ou synthétique, fleurs naturelle ou synthétique avec incorporation à la nouvelle entité réelle substituant le dispositif dit dispositif entité réelle.

Selon une autre caractéristique particulièrement avantageuse, le procédé consiste à équiper le boîtier entité réelle des moyens permettant de détecter la position exacte de l'objet, l'orientation de l'objet, sens de déplacement de l'objet et la vitesse de déplacement de l'objet.

Selon une autre caractéristique particulièrement avantageuse, les moyens de traitement d'images des modules de détection communiquent avec les systèmes de guidage et de pilotage et/ou des moyens de reconnaissance vocale munis d'intelligence artificielle et de traitements des informations sonores reçues communiquant avec les systèmes de guidage et de pilotage d'engins volants et roulants.

Selon une autre caractéristique particulièrement avantageuse, le procédé consiste à équiper le module de détection d'un chronomètre permettant de déterminer la durée de connexion du module de détection au dispositif dit objet réel.

Selon une autre caractéristique particulièrement avantageuse, le procédé consiste à équiper un tronçon de route équipé de modules de détection placés le long de la route et séparés par une distance et à calculer la vitesse d'un véhicule se déplaçant sur ladite route et équipé d'un boîtier entité réelle en déterminant la durée du déplacement du véhicule entre deux modules de détection.

Ce procédé permet d'intégrer et de mieux gérer la détection du mouvement des objets (mobiles ou fixes) vivants ou inertes, situés ou évoluant le long ou à côtés ou sous les routes de navigations terrestres, maritimes, ferroviaires et aériennes ou d'objets évoluant sur ces routes de navigation.

Selon une autre caractéristique particulièrement avantageuse, le procédé consiste à :
- Recenser tous les mouvements possibles que pourrait faire l'entité,
- Associer à chaque mouvement que pourrait faire l'entité une description sonore ou visuelle et/ou un code
- Associer à chaque mouvement que pourrait faire l'entité, un ou plusieurs capteurs permettant de détecter ou de mesurer le mouvement de l'entité
- Équiper l'entité, un boîtier électronique contenant les capteurs associés à l'ensemble des mouvements recensés et que pouvait faire l'entité
- Détecter à l'aide des capteurs le mouvement réel effectué par l'entité,
- Diffuser la description et/ou le code associé au mouvement de l'entité détecté par les capteurs associés au mouvement de l'entité vers un module de détection grâce à des moyens équipant le boîtier électronique et permettant de télédiffuser et/ou radiodiffuser de façon unidirectionnelle et en broadcast et sans dialogue et en boucle le code ou la description associée au mouvement de l'entité et laquelle boucle de télédiffusion et/ou radiodiffusion est faite à des fréquences allant de 1 seconde à 120 secondes sur de très longues distances allant de 500 m jusqu'à 20000 m, laquelle télédiffusion et/ou radiodiffusion peut se faire à débit de 100Ko/s jusqu'à plus 10 Go/s et lequel module de détection est muni des moyens de réception de la description sonore ou visuelle et/ou du code associé au mouvement de l'entité et laquelle description est diffusée sur les moyens de diffusion sonore équipant le module de détection ou affichée sur les moyens d'affichage équipant le module de détection ou lequel code est dirigé vers les moyens d'exploitation à des fins de décodage à d'association à un mouvement grâce à une base de données contenant les codes associés à chaque mouvement réalisable possible et laquelle description et/ou code associé au mouvement peuvent être utilisés à des fins de commandes des organes de pilotage ou autopilotage du mouvement de l'entité.

Les types de mouvements possibles sont énumérés de façon non exhaustive dans la liste suivante :
- Marche avant
- Marche arrière
- Virage à gauche
- Virage à droite
- Sens de circulation
- Direction de circulation
- Freinage
- Ralentissement
- Déboitement
- Rabattement
- Circulation en sens inverse
- stationnement

Les applications envisagées sont nombreuses, parmi celles-ci :
- Publicité dans les engins roulants (véhicules terrestres, train, bateaux) et/ou volants (avions),
- Publicité pour les piétons,
- Guidage, autoguidage et pilotage des engins roulants et volants,
- Signalisation routière,
- Navigation routière,
- Répression d'infraction routière.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés.

### BRÈVE DESCRIPTION DES DESSINS

[Fig. 1] est un dessin schématique illustrant la transformation d'un panneau publicitaire remplacé par un boîtier entité réelle d'un dispositif conforme à l'invention;
[Fig. 2] est un dessin schématique illustrant la transformation d'un panneau de signalisation routière remplacé par un boîtier entité réelle d'un dispositif conforme à l'invention;
[Fig. 3] est un dessin schématique illustrant la transformation d'un magasin équipé remplacé par un boîtier entité réelle d'un dispositif conforme à l'invention ;
[Fig. 4] est un dessin schématique illustrant la mise en œuvre du dispositif équipant un camion et une voiture ;
[Fig. 5] est un dessin schématique illustrant la mise en œuvre du dispositif équipant une bicyclette et une voiture ;
[Fig. 6] est un dessin schématique illustrant la mise en œuvre du dispositif équipant une voiture et une chaussée à des fins de gestion de la vitesse de la voiture ;
[Fig. 7] est un dessin schématique illustrant la mise en œuvre du dispositif équipant une pluralité de voitures et une chaussée;
[Fig. 8] est un dessin schématique illustrant la mise en œuvre du dispositif équipant une pluralité de voitures et une chaussée.

### DESCRIPTION DE MODES DE RÉALISATION EN APPUI DES DESSINS

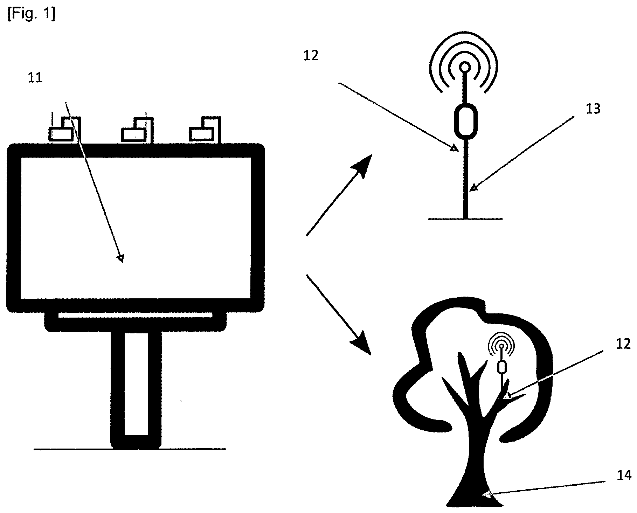

La figure 1 illustre un exemple de transformation par substitution totale d'un panneau publicitaire (11) en un poteau (13) équipé d'un boîtier électronique dit boîtier entité réelle (12) ou en un arbre (14) équipé d'un boîtier électronique dit boîtier entité réelle (12).

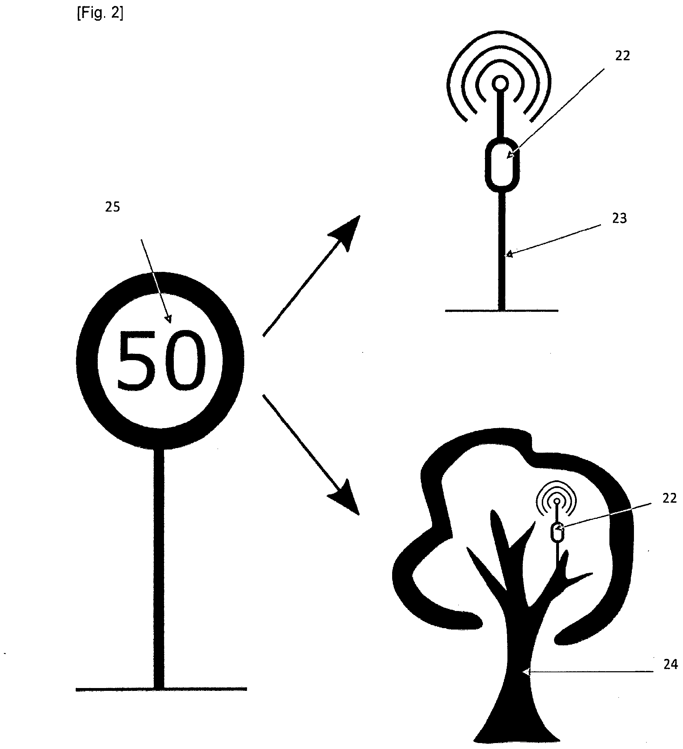

La figure 2 illustre un exemple de transformation par substitution totale d'un panneau de signalisation routière (25) en un poteau (23) équipé d'un boîtier électronique dit boîtier entité réelle (22) ou en un arbre (24) équipé d'un boîtier électronique dit boîtier entité réelle (22).

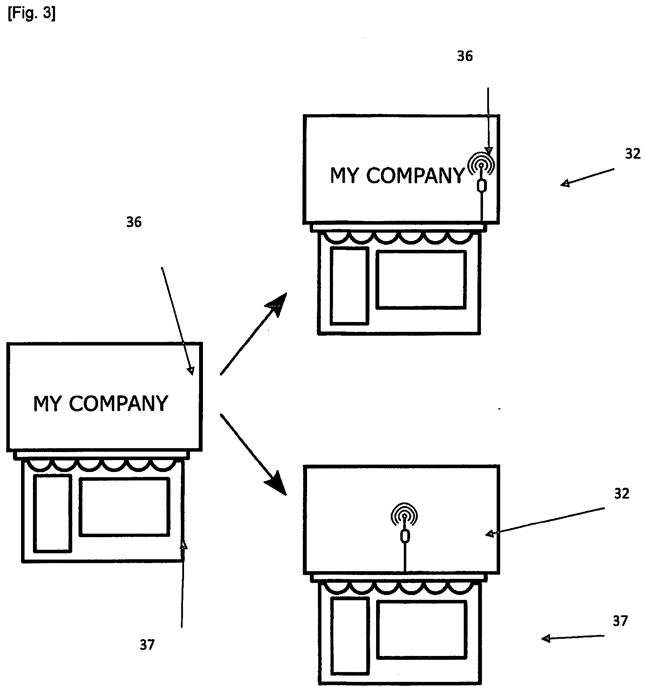

La figure 3 illustre un exemple de transformation par incorporation à une enseigne (36) d'un magasin (37) d'un boîtier électronique dit boîtier entité réelle (32) ou par remplacement substitution totale de l'enseigne (36) du magasin (37) par un boîtier électronique dit boîtier entité réelle (32)

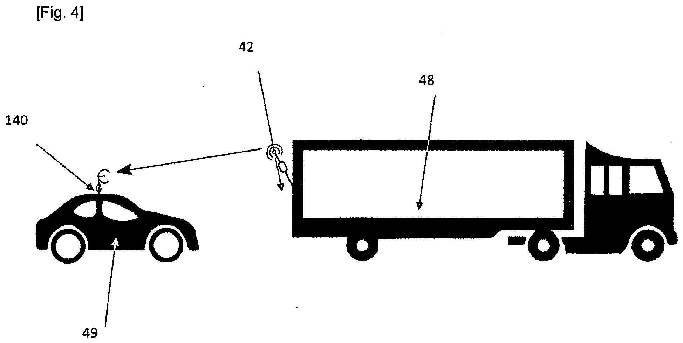

La figure 4 illustre un exemple de détection d'un camion semi-remorque (48) équipé d'un dispositif dit boîtier entité réelle (42) par une voiture (49) équipée d'un module de détection (140).

Les informations reçues par le module de détection (140) équipant la voiture (49) sont par exemple : Détection camion semi-remorque de 38 tonnes de la marque FORD évoluant dans le sens de la marche de la voiture à 100 mètres

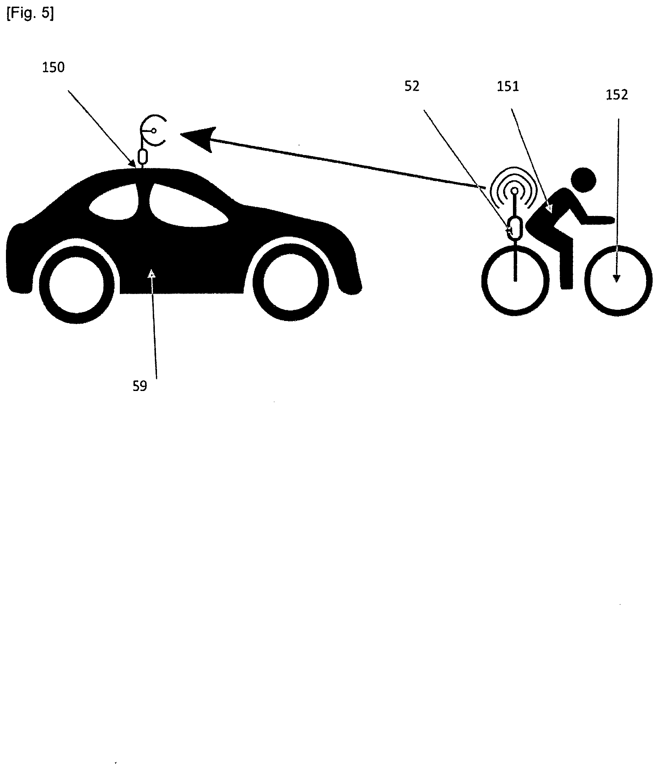

La figure 5 illustre un exemple de détection d'un cycliste (151) et son vélo (152) équipé d'un dispositif dit boîtier entité réelle (52) par une voiture (59) équipée d'un module de détection (150). Les informations reçues par le module de détection (150) équipant la voiture (59) sont par exemple : Détection Homme jeune sur un 2.5 puces vélo de marque DECATLON évoluant dans le sens de la marche de la voiture à 400 mètres

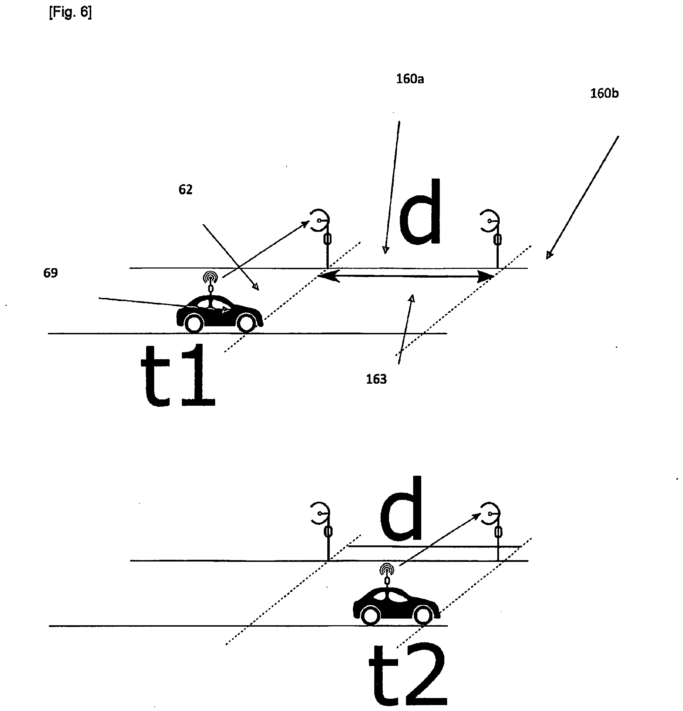

La figure 6 illustre un exemple d'utilisation du procédé pour la détection de l'excès de vitesse d'une voiture (69) équipée du dispositif dit boîtier entité réelle, circulant sur un tronçon de route (163) équipé de deux modules de détection (160a) et (160b) placés le long de la route (163) et séparés par une distance (d). Les deux modules de détection (160a) et (160b) sont reliés à une centrale de traitement des données et d'émission des procès-verbaux d'infraction de la route. La vitesse sur le tronçon (d) de la route (163) est limitée par les autorités locales à une valeur VL. Au temps t1, la voiture (69) arrive au niveau du module de détection (160a) qui reçoit les informations envoyées par le dispositif dit boîtier entité réelle (62) équipant la voiture (69) et qui mesure le temps t1. Les informations reçues sont par exemple voiture rouge CITROEN C5 immatriculation 400VB75 propriétaire monsieur DuPONT domicilié au 45 rue radar - 75000 PARIS France.

Au temps t2, la voiture (69) arrive au niveau du module de détection (160b) qui reçoit les informations envoyées par le dispositif dit boîtier entité réelle (62) équipant la voiture (69) et qui mesure le temps t2. Les informations reçues sont par exemple voiture rouge CITROEN C5 immatriculation 400VB75 propriétaire monsieur DuPONT domicilié au 45 rue radar - 75000 PARIS France. Les temps t1 et t2 sont envoyés à la centrale de traitement des données ainsi les informations sur la voiture et le propriétaire. La différence de temps t2-t1 est calculée par la centrale de traitement des données. Si la voiture est en excès de vitesse, la différence de temps t2-t1 est inférieure à d/L et un procès-verbal d'excès de vitesse est édité et une amende est envoyée à monsieur DuPONT à l'adresse indiquée.

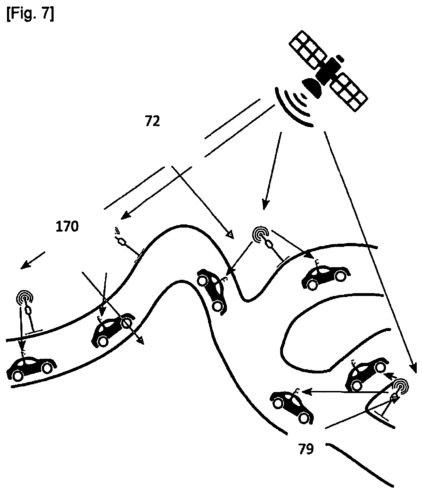

La figure 7 illustre plusieurs voitures (79) équipées de module de détection (170) circulant sur des réseaux routiers maillés de boîtiers dits boîtiers entité réelle (72)

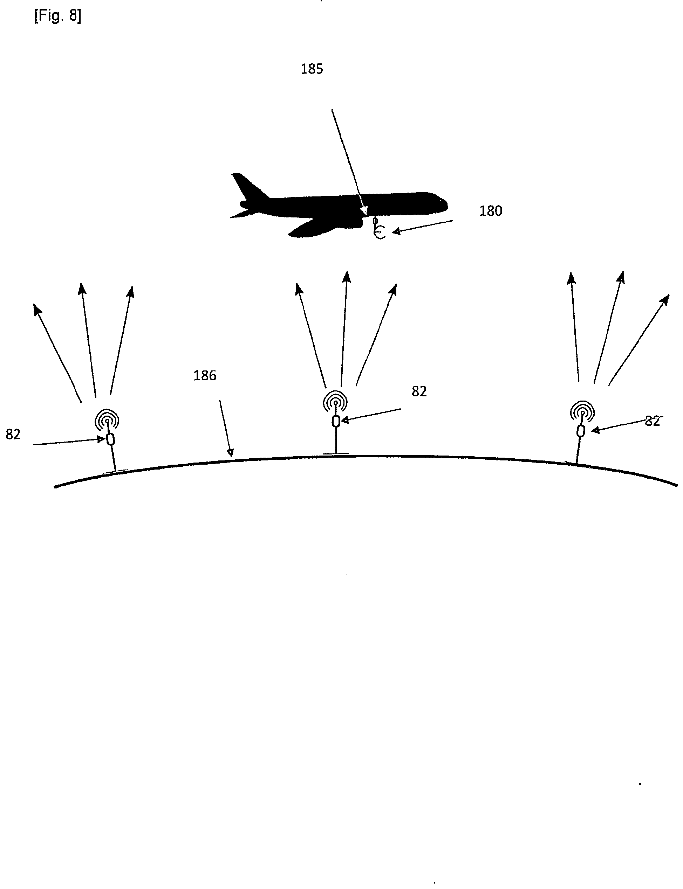

La figure 8 illustre un avion (185) équipé d'un module de détection (180) volant au-dessus d'un territoire (186) sur lequel sont installés plusieurs boîtiers dit boîtiers entité réelle (2) remplaçant les panneaux publicitaires et envoyant des publicités concernant les activités commerciales et touristiques du territoire survolé aux passagers (non représentés) de l'avion (185).

On comprend que le dispositif et le procédé qui viennent d'être ci-dessus décrits et représentés, l'ont été en vue d'une divulgation plutôt que d'une limitation. Bien entendu, divers aménagements, modifications et améliorations pourront être apportés aux exemples ci-dessus, sans pour autant sortir du cadre de l'invention définie par les revendications en annexe.

## Revendications

1. Procédé de détection et d'identification d'une entité vivante ou non appelée objet réel à détecter, dans lequel le procédé consiste :
- -- A transformer l'objet réel à détecter fixe ou mobile, inerte ou vivant en un autre objet réel détectable par intégration ou incorporation ou par association à l'objet réel à détecter d'un boîtier électronique dit boîtier entité réelle ou par substitution d'une partie ou de la totalité de l'objet réel à détecter par un boîtier électronique dit boîtier entité réelle, lequel boîtier dit boîtier entité réelle permettant de télédiffuser de façon unidirectionnelle et en broadcast et sans dialogue et en boucle une image réelle ou virtuelle ou un avatar de l'objet réel à détecter et des informations dites attributs associées à l'identité de l'objet réel à détecter tels le type de l'objet, la nature de l'objet, le nom de l'objet, le contenu de l'objet, les dimensions de l'objet, et/ou lequel boîtier entité réelle permettant de radiodiffuser de façon unidirectionnelle et en broadcast et sans dialogue et en boucle des enregistrements sonores de la description audio de l'objet réel à détecter et des informations associées à l'identité de l'objet réel à détecter,
lequel boîtier entité réelle possédant une identité numérique unique et comporte :
∘ Un moyen de stockage et/ou d'enregistrement numérique permettant de stocker une image réelle ou virtuelle de l'objet réel à détecter et des attributs associés à l'identité de l'objet réel à détecter ou lequel moyen de stockage permettant de stocker et/ou d'enregistrer la description audio de l'objet réel à détecter et des informations associées à l'identité de l'objet réel à détecter et lequel moyen de stockage et/ou d'enregistrement et de stockage a des capacités pouvant aller de 0.1 Mo à plus d'10 To
∘ Un moyen interne d'alimentation électrique du boîtier entité réelle, lequel moyen d'alimentation est rechargeable ou non et lequel moyen d'alimentation électrique peut être relié à des moyens externes de charge de type panneaux solaire, éolienne, champ magnétique, piézoélectrique ou à un réseau électrique,
∘ Des moyens de réception à distance allant de 500 m jusqu'à 100 000 km par liaison sans fil numérique ou par liaison filaire des informations associées à l'objet,
∘ Des moyens de capture de l'image réelle de l'objet réel à détecter avec son environnement associé ou non et des moyens de transformation de l'image réelle de l'objet à détecter en une image virtuelle permettant de garder la confidentialité de l'image visuelle réelle de l'objet réel à détecter
∘ Des moyens permettant de détecter la position exacte de l'objet, l'orientation de l'objet, sens de déplacement de l'objet et la vitesse de déplacement de l'objet,
∘ Des moyens permettant de télédiffuser de façon unidirectionnelle et en broadcast et sans dialogue et en boucle une image réelle ou virtuelle ou un avatar de l'objet réel à détecter et des attributs associées à l'identité de l'objet réel à détecter avec la position, l'orientation de l'objet, sens de déplacement de l'objet et la vitesse de déplacement de l'objet et/ou lequel boîtier entité réelle permettant de radiodiffuser de façon unidirectionnelle et en broadcast et sans dialogue et en boucle des enregistrements sonores de la description audio de l'objet réel à détecter et des informations associées à l'identité de l'objet réel à détecter avec les informations de position, d'orientation de l'objet, sens de déplacement de l'objet et la vitesse de déplacement de l'objet et laquelle boucle de télédiffusion et/ou radiodiffusion est faite à des fréquences allant de 1 seconde à 120 secondes sur de très longues distances allant de 500 m jusqu'à 20000 m, laquelle télédiffusion et/ou radiodiffusion se fait à débit de 100Ko/s jusqu'à plus 10 Go/s,
- A télédiffuser de façon unidirectionnelle et en broadcast et sans dialogue et en boucle une image ou un avatar de l'objet réel à détecter et des attributs associés à l'identité de l'objet réel à détecter avec la position, l'orientation de l'objet, le sens de déplacement de l'objet et la vitesse de déplacement de l'objet vers un ou plusieurs modules dits modules de détection mobiles ou fixes et/ou à radiodiffuser de façon unidirectionnelle et en broadcast et sans dialogue et en boucle des enregistrements sonores de la description audio de l'objet réel à détecter et des informations associées à l'identité de l'objet réel à détecter vers un ou plusieurs modules dits modules de détection mobiles ou fixes, lesquels modules de détection sont incorporés ou intégrés dans des engins roulants ou volants, dans des engins roulants ou volants autonomes ou semi-autonomes, dans des ordinateurs portables de typePC et smartphone ou sont portés par les êtres humains et lesquels modules de détection sont munis chacun :
∘ Des moyens de réception des images réelles ou virtuelles de l'objet réel à détecter associées aux divers attributs de l'objet réel et/ou de réception des enregistrements sonores de la description audio de l'objet réel à détecter et des informations associées à l'identité de l'objet réel à détecter
∘ Des moyens de stockage temporaire des images de l'objet réel à détecter associées aux divers attributs de l'objet réel et/ou des enregistrements sonores de la description audio de l'objet réel à détecter et des informations associées à l'identité de l'objet réel à détecter
∘ Des moyens d'affichage ou de projections des images de l'objet réel à détecter associées aux divers attributs de l'objet réel et/ou des moyens d'écoute des enregistrements sonores de la description audio de l'objet réel à détecter et des informations associées à l'identité de l'objet réel à détecter et reçus par le module de détection
∘ Des moyens de traitement des images de l'objet réel à détecter associées aux divers attributs de l'objet réel,
Lesquels modules de détection se connectent à un ou à la fois à plusieurs boîtiers dits boîtier entité réelle avec des durées de connexion variant entre 2 secondes à 10 minutes et reçoivent l'image de l'objet réel à détecter avec toutes informations de son identification associées avec la position, l'orientation de l'objet, le sens de déplacement de l'objet et la vitesse de déplacement de l'objet et les affichent sur les moyens d'affichage équipant les modules de détection et/ou dirigent les informations sur l'identité et les autres attributs de l'objet réel identifié avec la position, l'orientation de l'objet, le sens de déplacement de l'objet et la vitesse de déplacement de l'objet vers les systèmes de pilotage et de guidage d'engins semi-autonomes roulants ou volants ou d'engins autonomes roulants ou volants et/ou lesquels modules de détection se connectent à un ou à la fois à plusieurs boîtiers dits boîtiers entité réelle avec des durées de connexion variant entre 2 secondes à 10 minutes et reçoivent des informations sonores de la description audio de l'objet réel à détecter et des informations associées à l'identité de l'objet réel à détecter avec les informations sonores de la position, de l'orientation de l'objet, le sens de déplacement de l'objet et la vitesse de déplacement de l'objet et les dirigent vers les moyens d'écoute sonore équipant le module de détection et/ou dirigent les informations sur l'identité et les autres attributs de l'objet réel identifié avec les informations sur la position, l'orientation de l'objet, le sens de déplacement de l'objet et la vitesse de déplacement de l'objet vers les systèmes de traitement des informations sonores à des fins de pilotage et de guidage d'engins semi-autonomes roulants ou volants ou d'engins autonomes roulants ou volants.

2. Procédé selon revendication 1, **CARACTÉRISÉ EN CE QUE** dans le cadre de la transformation de l'entité par substitution totale, comme c'est le cas des panneaux publicitaires, des enseignes et pré-enseignes, l'entité est remplacée par une autre entité de type arbre naturel ou synthétique, fleurs naturelle ou synthétique avec incorporation à la nouvelle entité de remplacement le dit boîtier entité réelle.

3. Procédé selon revendication 1, **CARACTÉRISÉ EN CE QUE** dans le cadre du guidage, de l'autoguidage et de pilotage d'engins autonomes ou semi-autonomes, les informations reçues par le module de détection de la part du boîtier entité réelle permettent d'agir sur les commandes des engins (direction, accélération, freinage).

4. Procédé selon revendication 1, **CARACTÉRISÉ EN CE QU'**il consiste à équiper le boîtier entité réelle des moyens permettant de détecter la position exacte de l'objet, l'orientation de l'objet, sens de déplacement de l'objet et la vitesse de déplacement de l'objet.

5. Procédé selon revendication 1, **CARACTÉRISÉ EN CE QUE** les moyens de traitement d'images des modules de détection communiquent avec les systèmes de guidage et de pilotage et/ou des moyens de reconnaissance vocale munis d'intelligence artificielle et de traitements des informations sonores reçues communiquant avec les systèmes de guidage et de pilotage d'engins volants ou roulants.

6. Procédé selon revendication 1, **CARACTÉRISÉ EN CE QU'**il consiste à équiper le module de détection d'un chronomètre permettant de déterminer la durée de connexion du module de détection au boîtier entité réelle.

7. Procédé selon la revendication 1, **CARACTÉRISÉ EN CE QU'**il consiste à équiper un tronçon de route (163) équipé de modules de détection (160a et 160b) placés le long de la route (163) et séparés par une distance et à calculer la vitesse d'un véhicule (69) se déplaçant sur ladite route et équipé d'un boîtier entité réelle (62) en déterminant la durée du déplacement du véhicule (69) entre deux modules de détection.

8. Procédé selon la revendcation 1,
**CARACTÉRISÉ EN CE QU'**il consiste à :
--- Recenser tous les mouvements possibles que pourrait faire l'entité,
--- Associer à chaque mouvement que pourrait faire l'entité une description sonore ou visuelle et/ou un code,
--- Associer à chaque mouvement que pourrait faire l'entité, un ou plusieurs capteurs permettant de détecter ou de mesurer le mouvement de l'entité,
--- Équiper l'entité, d'un boîtier électronique dit boîtier entité réelle contenant les capteurs associés à l'ensemble des mouvements recensés et que pouvait faire l'entité,
-- Détecter à l'aide des capteurs le mouvement réel effectué par l'entité,
-- Diffuser la description et/ou le code associé au mouvement de l'entité détecté par les capteurs associés au mouvement de l'entité vers un module de détection grâce à des moyens équipant le boîtier électronique dit boîtier entité réelle et permettant de télédiffuser et/ou radiodiffuser de façon unidirectionnelle et en broadcast et sans dialogue et en boucle le code ou la description associée au mouvement de l'entité et laquelle boucle de télédiffusion et/ou radiodiffusion est faite à des fréquences allant de 1 seconde à 120 secondes sur de très longues distances allant de 500 m jusqu'à 20000 m, laquelle
télédiffusion et/ou radiodiffusion se fait à débit de 100Ko/s jusqu'à plus 10 Go/s et lequel module de détection est muni des moyens de réception de la description sonore ou visuelle et/ou du code associé au mouvement de l'entité et laquelle description est diffusée sur les moyens de diffusion sonore équipant le module de détection ou affichée sur les moyens d'affichage équipant le module de détection ou lequel code est dirigé vers les moyens d'exploitation à des fins de décodage et d'association à un mouvement grâce à une base de données contenant les codes associés à chaque mouvement réalisable possible et laquelle description et/ou code associé au mouvement peuvent être utilisés à des fins de commandes des organes de pilotage ou autopilotage du mouvement de l'entité.

9. Dispositif de détection et d'identification d'une entité vivante ou non permettant de mettre en œuvre le procédé selon la revendication 1, dans lequel le dispositif comprend au moins un boîtier électronique détectable dit boîtier entité réelle (42) et au moins un module de détection (142), le boîtier entité réelle (42) s'associe, s'intègre, s'incorpore, se substitue partiellement ou non à l'entité réelle à détecter et à identifier (48), ledit boîtier entité réelle (42) diffuse de façon unidirectionnelle et en broadcast et sans dialogue et en boucle, une image réelle ou virtuelle ou un avatar de l'entité à détecter et des informations ou attributs associées à l'identité de l'entité, lequel boîtier entité réelle (42) possède une identité numérique unique et comporte :
Un moyen de stockage et/ou d'enregistrement numérique permettant de stocker une image réelle ou virtuelle de l'entité et/ou des informations ou attributs associées à l'identité de l'entité,
Un moyen interne d'alimentation électrique du boîtier entité réelle,
Des moyens de réception à distance des informations associées à l'entité,
Des moyens de capture de l'image réelle de l'entité avec son environnement associé ou non,
Des moyens de diffusion en boucle,
--- vers un ou plusieurs modules dits modules de détection (142) mobiles ou fixes, munis chacun :
Des moyens de réception des données constituées par les images et/ou informations diffusées par le boîtier entité réelle,
Des moyens de stockage temporaire desdites données,
Des moyens d'affichage et/ou d'écoute desdites données,
Des moyens de traitement des données.

10. Dispositif selon la revendication 9, **CARACTÉRISÉ PAR LE FAIT QUE** la diffusion est une télédiffusion.

11. Dispositif selon la revendication 9, **CARACTÉRISÉ PAR LE FAIT QUE** la diffusion est une radiodiffusion des enregistrements sonores d'une description audio de l'entité et des informations associées à l'identité de l'entité réelle à détecter.

12. Dispositif selon la revendication 9, **CARACTÉRISÉ PAR LE FAIT QUE** la description audio de l'entité réelle est une information ou attribut associé à l'entité.

13. Dispositif selon la revendication 9, **CARACTÉRISÉ PAR LE FAIT QUE** les informations ou attribut diffusés de l'entité comprennent la position, l'orientation, le sens de déplacement et la vitesse de déplacement de l'entité.

14. Dispositif selon la revendication 9, **CARACTÉRISÉ PAR LE FAIT QUE** le moyen de stockage et/ou d'enregistrement numérique a des capacités pouvant aller de 0.1 Mo à plus de 10 To.

15. Dispositif selon la revendication 9, **CARACTÉRISÉ PAR LE FAIT QUE** le moyen d'alimentation est rechargeable.

16. Dispositif selon la revendication 9, **CARACTÉRISÉ PAR LE FAIT QUE** le moyen d'alimentation électrique est relié à des moyens externes de charge de type panneaux solaires, éolienne, champ magnétique, piézoélectrique ou à un réseau électrique,

17. Dispositif selon la revendication 9, **CARACTÉRISÉ PAR LE FAIT QUE** les moyens de réception à distance vont de 500m jusqu'à 100 000 km.

18. Dispositif selon la revendication 9, **CARACTÉRISÉ PAR LE FAIT QU'**il comprend des moyens de transformation de l'image réelle de l'entité en une image virtuelle.

19. Dispositif selon la revendication 10 et/ou la revendication 11, **CARACTÉRISÉ PAR LE FAIT QUE** la boucle de télédiffusion et/ou radiodiffusion est faite à des fréquences allant de 1 seconde à 120 secondes sur de très longues distances allant de 500 m jusqu'à 20000 m, laquelle télédiffusion et/ou radiodiffusion se fait à débit de 100Ko/s jusqu'à plus de 10 Go/s.

20. Dispositif selon la revendication 9, **CARACTÉRISÉ PAR LE FAIT QUE** les modules de détection sont incorporés ou intégrés dans des engins roulants ou volants, dans des engins roulants ou volants autonomes ou semi-autonomes, dans des ordinateurs portables de type PC et smartphone ou sont portés par les êtres humains.

21. Dispositif selon la revendication 13, **CARACTÉRISÉ PAR LE FAIT QU'**il comprend des moyens de détection de la position exacte de l'objet, de l'orientation de l'objet, du sens de déplacement de l'objet et la vitesse de déplacement de l'objet qui sont constitués de capteurs GPS, de capteurs inertiels et gyroscopiques et d'accéléromètres.

22. Dispositif selon la revendication 9, **CARACTÉRISÉ PAR LE FAIT QUE** le module de détection et/ou le boîtier entité réelle sont intégrés à des sacs à dos, à des sacs à main, à des valises, à des casques vélos et motos en vu de leur utilisation par les êtres humains.

23. Dispositif selon la revendication 9, **CARACTÉRISÉ PAR LE FAIT QUE** le module de détection et/ou le boîtier entité réelle sont constitués par un smartphone modifié pour la mise en œuvre des nouvelles fonctions du dispositif gérées par exemple une application dédiée, smartphone avec lequel seront compatibles les programmes de conduites des véhicules roulants et les programmes de sécurité de ces véhicules.

24. Dispositif selon la revendication 13, **CARACTÉRISÉ PAR LE FAIT QUE** les moyens de traitements de données du module de détection communiquent avec des systèmes de guidage et de pilotage d'engins volants ou roulants.

25. Dispositif selon la revendication 9, **CARACTÉRISÉ PAR LE FAIT QUE** le module de détection comprend un chronomètre permettant de déterminer la durée de connexion du module de détection au boîtier entité réelle.

## Patentansprüche

1. Verfahren zur Erfassung und zur Identifizierung einer belebten oder unbelebten Einheit, die als zu erfassendes reales Objekt bezeichnet wird, wobei das Verfahren darin besteht:
- das zu erfassende reale Objekt unbeweglicher oder beweglicher, inerter oder belebter Art in ein anderes erfassbares reales Objekt umzuwandeln, indem ein elektronischer Kasten, welcher als realer Einheitskasten bezeichnet wird, in das zu erfassende reale Objekt eingefügt oder eingebaut oder mit diesem in Verbindung gebracht wird oder indem das zu erfassende reale Objekt teilweise oder vollständig durch einen elektronischen Kasten, welcher als realer Einheitskasten bezeichnet wird, ersetzt wird, wobei der Kasten, welcher als realer Einheitskasten bezeichnet wird, es ermöglicht, auf unidirektionelle und ausstrahlende Weise sowie ohne Dialog und in Dauerschleife ein reales oder virtuelles Bild oder einen Avatar des zu erfassenden realen Objekts sowie Informationen, welche als Attribute bezeichnet werden, die mit der Identität des zu erfassenden realen Objekts in Zusammenhang stehen, wie etwa die Art des Objekts, die Beschaffenheit des Objekts, die Abmessungen des Objekts, über Entfernungen auszusenden, und/oder es der reale Einheitskasten ermöglicht, auf unidirektionelle und ausstrahlende Weise sowie ohne Dialog und in Dauerschleife Tonaufnahmen der Audiobeschreibung des zu erfassenden realen Objekts und Informationen, welche mit der Identität des zu erfassenden realen Objekts in Zusammenhang stehen, über Radiowellen auszusenden,
wobei die reale Einheitskasten eine einzigartige digitale Identität besitzt und Folgendes aufweist:
∘ ein Mittel zum digitalen Speichern und/oder Aufzeichnen, das es ermöglicht, ein reales oder virtuelles Bild des zu erfassenden realen Objekts sowie Informationen, welche als Attribute bezeichnet werden, die mit der Identität des zu erfassenden realen Objekts in Zusammenhang stehen, zu speichern, oder es das Mittel zum Speichern ermöglicht, die Audiobeschreibung des zu erfassenden realen Objekts sowie Informationen, die mit der Identität des zu erfassenden realen Objekts in Zusammenhang stehen, zu speichern und/oder aufzuzeichnen, und wobei das Mittel zum Speichern und/oder zum Aufzeichnen und zum Speichern eine Kapazität im Bereich von 0,1 MB bis mehr als 10 TB hat,
∘ ein internes Mittel zur Stromversorgung des realen Einheitskastens, wobei das Versorgungsmittel wiederaufladbar ist oder nicht und wobei Stromversorgungsmittel an externe Auflademittel vom Typ Solarmodul, Windkraftanlage, magnetisches Feld, piezoelektrisches Organ oder an ein Stromnetz angeschlossen werden kann,
∘ Mittel zum Empfang der Informationen, welche mit dem Objekt in Zusammenhang stehen, in einer Entfernung im Bereich von 500 m bis 100.000 km mittels digitaler drahtloser Verbindung oder mittels einer drahtgebundenen Verbindung,
∘ Mittel zur Aufnahme des realen Bildes des zu erfassenden realen Objekts mit der damit in Zusammenhang stehenden Umgebung oder ohne diese, und Mittel zum Umwandeln des realen Bildes des zu erfassenden realen Objekts in ein virtuelles Bild, welches es ermöglicht, die Vertraulichkeit des realen visuellen Bildes des zu erfassenden realen Objekts zu wahren,
∘ Mittel, die es ermöglichen, die exakte Position des Objekts, die Ausrichtung des Objekts, die Bewegungsrichtung des Objekts und die Bewegungsgeschwindigkeit des Objekts zu erfassen,
∘ Mittel, die es ermöglichen, auf unidirektionelle und ausstrahlende Weise sowie ohne Dialog und in Dauerschleife ein reales oder virtuelles Bild oder einen Avatar des zu erfassenden realen Objekts sowie Attribute, die mit der Identität des zu erfassenden realen Objekts in Zusammenhang stehen, mit der Position, der Ausrichtung des Objekts, der Bewegungsrichtung des Objekts und der Bewegungsgeschwindigkeit des Objekts über Entfernungen auszusenden, und/oder wobei es der reale Einheitskasten ermöglicht, auf unidirektionelle und ausstrahlende Weise sowie ohne Dialog und in Dauerschleife Tonaufnahmen der Audiobeschreibung des zu erfassenden realen Objekts und Informationen, welche mit der Identität des zu erfassenden realen Objekts in Zusammenhang stehen, mit den Informationen zur Position, zur Ausrichtung des Objekts, Bewegungsrichtung des Objekts und Bewegungsgeschwindigkeit des Objekts über Radiowellen auszusenden, wobei die Schleife zum Aussenden über Entfernungen und/oder zum Aussenden über Radiowellen mit Frequenzen im Bereich von 1 Sekunde bis 120 Sekunden über sehr weite Entfernungen im Bereich von 500 m bis 20.000 m betrieben wird, wobei das Aussenden über Entfernungen und/oder das Aussenden über Radiowellen mit einer Datenrate von 100 KB/s bis zu mehr als 10 GB/s erfolgt,
- ein Bild oder einen Avatar des zu erfassenden realen Objekts sowie Attribute, die mit der Identität des zu erfassenden realen Objekts in Zusammenhang stehen, mit der Position, der Ausrichtung des Objekts, der Bewegungsrichtung des Objekts und der Bewegungsgeschwindigkeit des Objekts über Entfernungen an ein oder mehrere Module zu senden, die als bewegliche oder unbewegliche Erfassungsmodule bezeichnet werden, und/oder auf unidirektionelle und ausstrahlende Weise sowie ohne Dialog und in Dauerschleife Tonaufnahmen der Audiobeschreibung des zu erfassenden realen Objekts und Informationen, welche mit der Identität des zu erfassenden realen Objekts in Zusammenhang stehen, über Radiowellen an ein oder mehrere Module zu senden, die als bewegliche oder unbewegliche Erfassungsmodule bezeichnet werden zu senden, wobei die Erfassungsmodule in rollende oder fliegende Geräte, in autonome oder halbautonome rollende oder fliegende Geräte, in tragbare Computer vom Typ PC und Smartphone eingebaut oder eingefügt sind oder von Menschen mitgeführt werden, wobei die Erfassungsmodule jeweils über Folgendes verfügen:
∘ Mittel zum Empfang der realen oder virtuellen Bilder des zu erfassenden realen Objekts, wobei diese mit den verschiedenen Attributen des realen Objekts in Zusammenhang stehen, und/oder zum Empfang der Tonaufnahmen der Audiobeschreibung des zu erfassenden realen Objekts und der Informationen, welche mit der Identität des zu erfassenden realen Objekts in Zusammenhangs stehen,
∘ Mittel zur zeitweisen Speicherung der Bilder des zu erfassenden realen Objekts, wobei diese mit den verschiedenen Attributen des realen Objekts in Zusammenhang stehen, und/oder der Tonaufnahmen der Audiobeschreibung des zu erfassenden realen Objekts und der Informationen, welche mit der Identität des zu erfassenden realen Objekts in Zusammenhangs stehen,
∘ Mittel zur Anzeigen oder Projizieren der Bilder des zu erfassenden realen Objekts, wobei diese mit den verschiedenen Attributen des realen Objekts in Zusammenhang stehen, und/oder Mittel zum Abhören der Tonaufnahmen der Audiobeschreibung des zu erfassenden realen Objekts und der Informationen, welche mit der Identität des zu erfassenden realen Objekts in Zusammenhangs stehen, wobei der Empfang durch das Erfassungsmodul erfolgte,
∘ Mittel zur Verarbeitung der Bilder des zu erfassenden realen Objekts, die mit den verschiedenen Attributen des realen Objekts in Zusammenhang stehen,
wobei die Erfassungsmodule sich mit einem oder gleichzeitig mit mehreren Kästen verbinden, welche als reale Einheitskästen bezeichnet werden, mit Verbindungsdauern im Bereich von 2 Sekunden bis 10 Minuten, und das Bild des zu erfassenden realen Objekts mit sämtlichen Informationen zu dessen Identifizierung empfangen, welche im Zusammenhang mit der Position, der Ausrichtung des Objekts, der Bewegungsrichtung des Objekts und der Bewegungsgeschwindigkeit des Objekts stehen, und diese auf Anzeigemitteln anzeigen, mit denen die Erfassungsmodule ausgestattet sind, und/oder die Informationen zur Identität und die anderen Attribute des identifizierten zu erfassenden realen Objekts mit der Position, der Ausrichtung des Objekts, der Bewegungsrichtung des Objekts und der Bewegungsgeschwindigkeit des Objekts den Systemen zur Steuerung und Führung halbautonomer rollender oder fliegender Geräte oder autonomer rollender oder fliegender Geräte zuführen und/oder die Erfassungsmodule sich mit einem oder gleichzeitig mit mehreren Kästen verbinden, welche als reale Einheitskästen bezeichnet werden, mit Verbindungsdauern im Bereich von 2 Sekunden bis 10 Minuten, und Toninformationen der Audiobeschreibung des zu erfassenden realen Objekts und Information, welche im Zusammenhang der Identität des zu erfassenden realen Objekts stehen, mit den Toninformationen zur Position, zur Ausrichtung des Objekts, der Bewegungsrichtung des Objekts und der Bewegungsgeschwindigkeit des Objekts empfangen und diese den Tonabhörmitteln zuführen, mit denen das Erfassungsmodul ausgestattet ist, und/oder die Informationen zur Identität und die anderen Attribute des identifizierten realen Objekts mit den Informationen zur Position, der Ausrichtung des Objekts, der Bewegungsrichtung des Objekts und der Bewegungsgeschwindigkeit des Objekts den Systemen zur Verarbeitung der Toninformationen zuführen, um halbautonome rollende oder fliegende Geräte oder autonome rollende oder fliegende Geräte zu steuern und zu führen.

2. Verfahren nach Anspruch 1, **DADURCH GEKENNZEICHNET, DASS** im Rahmen der Umwandlung der Einheit durch vollständigen Ersatz, wie es bei Werbetafeln, Gewerbeschildern und Gewerbeankündigungen der Fall ist, wird die Einheit durch eine andere Einheit der Art natürlicher oder künstlicher Baum, natürliche oder künstliche Blume ersetzt, wobei die reale Einheitskasten in die neue Ersatzeinheit eingebaut wird.

3. Verfahren nach Anspruch 1, **DADURCH GEKENNZEICHNET, DASS** es die Informationen, welche das Erfassungsmodul vom realen Einheitskasten empfängt, im Rahmen des Führens, des Selbstführens und des Steuerns autonomer oder halbautonomer Geräte ermöglichen, auf die Leitfunktionen der Geräte (Steuerung, Beschleunigung, Bremsung) einzuwirken.

4. Verfahren nach Anspruch 1, **DADURCH GEKENNZEICHNET, DASS** es darin besteht, den realen Einheitskasten mit den Mitteln auszustatten, die es ermöglichen, die exakte Position des Objekts, die Ausrichtung des Objekts, die Bewegungsrichtung des Objekts und die Bewegungsgeschwindigkeit des Objekts zu erfassen.

5. Verfahren nach Anspruch 1, **DADURCH GEKENNZEICHNET, DASS** die Mittel zur Bildverarbeitung der Erfassungsmodule mit den Systemen zur Führung und zur Steuerung und/oder mit Stimmerkennungsmitteln kommunizieren, welche mit künstlicher Intelligenz und mit Verarbeitungsvorgängen der empfangenen klanglichen Informationen ausgestattet sind, wobei sie mit den Systemen zur Führung und Steuerung von fliegenden oder rollenden Geräten kommunizieren.

6. Verfahren nach Anspruch 1, **DADURCH GEKENNZEICHNET, DASS** es darin besteht, das Erfassungsmodul mit einem Zeitmesser auszustatten, der es ermöglicht, die Verbindungsdauer des Erfassungsmoduls mit dem realen Einheitskasten zu bestimmen.

7. Verfahren nach Anspruch 1, **DADURCH GEKENNZEICHNET, DASS** es darin besteht, einen Straßenabschnitt (163) auszustatten, der mit Erfassungsmodulen (160a und 160b) ausgestattet ist, welche entlang der Straße (163) angeordnet und voneinander beabstandet sind, und die Geschwindigkeit eines Fahrzeugs (69) zu berechnen, das auf der Straße fährt und mit einem realen Einheitskasten (62) ausgestattet ist, indem die Fahrtdauer des Fahrzeugs (69) zwischen zwei Erfassungsmodulen bestimmt wird.

8. Verfahren nach Anspruch 1, **DADURCH GEKENNZEICHNET, DASS** es darin besteht:
- ein Verzeichnis sämtlicher Bewegungen zu erstellen, welche die Einheit ausführen könnte,
- jeder Bewegung, welche die Einheit ausführen könnte, ein klangliche oder visuelle Beschreibung oder einen Code zuzuordnen,
- jeder Bewegung, welche die Einheit ausführen könnte, einen oder mehrere Sensoren zuzuordnen, die es ermöglichen, die Bewegung der Einheit zu erfassen oder zu messen,
- die Einheit mit einem elektronischen Kasten auszustellen, der als realer Einheitskasten bezeichnet wird und die Sensoren enthält, welche der Gesamtheit der Bewegungen zugeordnet sind, wie sie im Verzeichnis aufgeführt sind und von der Einheit ausgeführt werden könnten,
- Erfassen der Bewegung, welche die Einheit tatsächlich ausgeführt hat, mit Hilfe der Sensoren,
- die Beschreibung oder den Code, welche/welcher der Bewegung der Einheit zugeordnet ist, wie sie von den Sensoren erfasst wurde, welche der Bewegung der Einheit zugeordnet sind, mit Hilfe von Mitteln, mit denen der elektronische Kasten, welcher als realer Einheitskasten bezeichnet wird, ausgestattet ist und die es ermöglichen, den Code oder die Beschreibung, welcher/welche der Bewegung der Einheit zugeordnet ist, auf unidirektionelle und ausstrahlende Weise sowie ohne Dialog und in Dauerschleife über Entfernungen auszusenden oder über Radiowellen auszusenden, an ein Erfassungsmodul zu senden, wobei die Schleife zum Aussenden über Entfernungen und/oder Aussenden über Radiowellen mit Frequenzen im Bereich von 1 Sekunde bis 120 Sekunden über sehr weite Entfernungen im Bereich von 500 m bis zu 20.000 m betrieben wird, wobei das Aussenden über Entfernungen und/oder Aussenden über Radiowellen mit einer Datenrate von 100 KB/s bis mehr als 10 GB/s erfolgt, und wobei das Erfassungsmodul mit Mitteln zum Empfang der klanglichen oder visuellen Beschreibung und/oder des Codes versehen ist, welcher der Bewegung der Einheit zugeordnet ist, wobei die Beschreibung über die Mittel zum klanglichen Aussenden ausgesendet wird, mit welchen das Erfassungsmodul ausgestattet ist, oder sie über die Anzeigemittel angezeigt wird, mit welchen das Erfassungsmodul ausgestattet ist, oder wobei der Code den Auswertungsmitteln zugeführt wird, um entziffert und dank einer Datenbank, welche die Codes enthält, welche jeder der möglicherweise ausführbaren Bewegungen zugeordnet sind, einer Bewegung zugeordnet wird, und wobei die Beschreibung und/oder der Code, welcher der Bewegung zugeordnet ist, dazu verwendet werden können, Organe zu steuern, welche der Steuerung oder Selbststeuerung der Bewegung der Einheit dienen.

9. Vorrichtung zur Erfassung und Identifizierung einer belebten oder unbelebten Einheit, wobei sie es ermöglicht, das Verfahren nach Anspruch 1 umzusetzen, wobei die Vorrichtung mindestens einen erfassbaren elektronischen Kasten, der als realer Einheitskasten (42) bezeichnet wird, und mindestens ein Erfassungsmodul (142) umfasst, wobei der reale Einheitskasten (42) der zu erfassenden und zu identifizierenden reale Einheit (48) zugeordnet, in diese eingefügt, eingebaut wird, wobei er diese teilweise ersetzt oder nicht, wobei der reale Einheitskasten (42) auf unidirektionelle und ausstrahlende Weise sowie ohne Dialog und in Dauerschleife ein reales oder virtuelles Bild oder einen Avatar der zu erfassenden Einheit und Informationen oder Attribute aussendet, welche mit der Identität der Einheit in Zusammenhang stehen, wobei der reale Einheitskasten (42) eine einzigartige digitale Identität besitzt und Folgendes aufweist:
ein Mittel zum digitalen Speichern und/oder Aufzeichnen, das es ermöglicht, ein reales oder virtuelles Bild der Einheit und/oder Informationen oder Attribute, die mit der Identität der Einheit in Zusammenhang stehen, zu speichern,
ein internes Mittel zur Stromversorgung des realen Einheitskastens,
Mittel zum Empfang über Entfernungen von Informationen, die mit der Einheit in Zusammenhang stehen,
Mittel zur Aufnahme des realen Bilds der Einheit mit der damit in Zusammenhang stehenden Umgebung oder ohne diese,
Mittel zum Aussenden in Dauerschleife,
- in Richtung eines oder mehrerer beweglicher oder unbeweglicher Module, die als Erfassungsmodule (142) bezeichnet werden, wobei diese jeweils mit Folgendem versehen sind:
Mitteln zum Empfang von Daten, die aus den Bildern und/oder Informationen bestehen, welche von dem realen Einheitskasten ausgesendet werden,
Mitteln zur zeitweisen Speicherung dieser Daten,
Mitteln zum Anzeigen und/oder Abhören der Daten,
Mitteln zur Verarbeitung der Daten.

10. Vorrichtung nach Anspruch 9, **DADURCH GEKENNZEICHNET, DASS** das Aussenden ein Aussenden über Entfernungen ist.

11. Vorrichtung nach Anspruch 9, **DADURCH GEKENNZEICHNET, DASS** es sich bei dem Aussenden um ein Aussenden über Radiowellen von Tonaufnahmen einer Audiobeschreibung der Einheit und von Informationen handelt, welche mit der zu erfassenden realen Einheit in Zusammenhang stehen.

12. Vorrichtung nach Anspruch 9, **DADURCH GEKENNZEICHNET, DASS** die Audiobeschreibung der realen Einheit eine Information oder ein Attribut ist, die/das mit der Einheit in Zusammenhang steht.

13. Vorrichtung nach Anspruch 9, **DADURCH GEKENNZEICHNET, DASS** die Informationen oder das Attribut, welche von der Einheit ausgesendet werden, die Position, die Ausrichtung, die Bewegungsrichtung und die Bewegungsgeschwindigkeit der Einheit umfassen.

14. Vorrichtung nach Anspruch 9, **DADURCH GEKENNZEICHNET, DASS** das Mittel zum digitalen Speichern und/oder Aufzeichnen Kapazitäten hat, die im Bereich von 0,1 MB bis mehr als 10 TB liegen können.

15. Vorrichtung nach Anspruch 9, **DADURCH GEKENNZEICHNET, DASS** das Versorgungsmittel wiederaufladbar ist.

16. Vorrichtung nach Anspruch 9, **DADURCH GEKENNZEICHNET, DASS** das Stromversorgungsmittel an externe Auflademittel vom Typ Solarmodule, Windkraftanlage, magnetisches Feld, piezoelektrisches Organ oder an ein Stromnetz angeschlossen ist.

17. Vorrichtung nach Anspruch 9, **DADURCH GEKENNZEICHNET, DASS** die Mittel zum Empfang in einer Entfernung im Bereich von 500 m bis zu 100.000 km liegen.

18. Vorrichtung nach Anspruch 9, **DADURCH GEKENNZEICHNET, DASS** sie Mittel zur Umwandlung des realen Bildes der Einheit in ein virtuelles Bild umfasst.

19. Vorrichtung nach Anspruch 10 und/oder Anspruch 11, **DADURCH GEKENNZEICHNET, DASS** die Dauerschleife zum Aussenden über Entfernungen und/oder Aussenden über Radiowellen mit Frequenzen im Bereich von 1 Sekunde bis 120 Sekunden über sehr lange Entfernungen im Bereich von 500 m bis zu 20.000 m betrieben wird, wobei das Aussenden über Entfernungen und/oder Aussenden über Radiowellen mit einer Datenrate von 100 KB/s bis mehr als 10 GB/s erfolgt.

20. Vorrichtung nach Anspruch 9, **DADURCH GEKENNZEICHNET, DASS** die Erfassungsmodule in rollende oder fliegende Geräte, in autonome oder halbautonome rollende oder fliegende Geräte, in tragbare Computer vom Typ PC und Smartphone eingebaut oder eingefügt sind oder von Menschen getragen werden.

21. Vorrichtung nach Anspruch 13, **DADURCH GEKENNZEICHNET, DASS** sie Mittel zur Erfassung der exakten Position des Objekts, der Ausrichtung des Objekts, der Bewegungsrichtung des Objekts und der Bewegungsgeschwindigkeit des Objekts umfasst, die aus GPS-Sensoren, aus Trägheits- und gyroskopartigen Sensoren und aus Beschleunigungsmessern bestehen.

22. Vorrichtung nach Anspruch 9, **DADURCH GEKENNZEICHNET, DASS** das Erfassungsmodul und/oder der reale Einheitskasten in Rücksäcke, Handtaschen, Koffer, Fahrradhelme eingefügt sind, um von Menschen verwendet zu werden.

23. Vorrichtung nach Anspruch 9, **DADURCH GEKENNZEICHNET, DASS** das Erfassungsmodul und/oder der reale Einheitskasten aus einem Smartphone bestehen, das derart modifiziert ist, dass neuartige Funktionen der Vorrichtung umgesetzt werden können, die beispielsweise von einer speziell dafür vorgesehenen Applikation verwaltet werden, wobei die Fahrprogramme der rollenden Fahrzeuge und die Sicherheitsprogramme dieser Fahrzeuge mit dem Smartphone kompatibel sein werden.

24. Vorrichtung nach Anspruch 13, **DADURCH GEKENNZEICHNET, DASS** die Datenverarbeitungsmittel des Erfassungsmoduls mit Führungs- und Steuerungssystemen von fliegenden oder rollenden Geräten kommunizieren.

25. Vorrichtung nach Anspruch 9, **DADURCH GEKENNZEICHNET, DASS** das Erfassungsmodel einen Zeitmesser umfasst, der es ermöglicht, die Verbindungsdauer des Erfassungsmoduls mit dem realen Einheitskasten zu bestimmen.

## Claims

1. Method for detecting and identifying a living or non-living entity called real object to be detected, wherein the method consists of:
--- transforming the real object to be detected which is fixed or mobile, inert or living, into another real object detectable by integration or incorporation or by association with the real object to be detected of an electronic box called real entity box or by substitution of part or all of the real object to be detected by an electronic box called real entity box, said box called real entity box making it possible to broadcast unidirectionally and in broadcast and without dialogue and in loop a real or virtual image or an avatar of the real object to be detected and information called attributes associated with the identity of the real object to be detected such as the type of the object, the nature of the object, the name of the object, the content of the object, the dimensions of the object, and/or said real entity box making it possible to broadcast unidirectionally and in broadcast and without dialogue and in loop sound recordings of the audio description of the real object to be detected and information associated with the identity of the real object to be detected,
said real entity box having a unique digital identity and comprises:
o Digital storing and/or recording means enabling to store a real or virtual image of the real object to be detected and attributes associated with the identity of the real object to be detected or said storing means enabling to store and/or record the audio description of the real object to be detected and information associated with the identity of the real object to be detected and said storing and/or recording and storing means has capacities ranging from 0.1 MB to more than 10 TB
o Internal power supply means of the real entity box, said power supply means may or may not be rechargeable and said power supply means may be connected to external charging means of the solar panel, wind turbine, magnetic field, piezoelectric type or to an electrical network,
o Means for remotely receiving, ranging from 500 m up to 100,000 km by digital wireless link or by wired link, the information associated with the object,
o Means for capturing the real image of the real object to be detected with its associated or non-associated environment and means for transforming the real image of the object to be detected into a virtual image making it possible to keep the confidentiality of the real visual image of the real object to be detected
o Means for detecting the exact position of the object, the orientation of the object, the direction of movement of the object and the speed of movement of the object,
o Means for broadcasting unidirectionally and in broadcast and without dialogue and in loop a real or virtual image or an avatar of the real object to be detected and attributes associated with the identity of the real object to be detected with the position, the orientation of the object, the direction of movement of the object and the speed of movement of the object and/or said real entity box enabling to broadcast unidirectionally and in broadcast and without dialogue and in loop sound recordings of the audio description of the real object to be detected and information associated with the identity of the real object to be detected with the information of position. orientation of the object, direction of movement of the object and the speed of movement of the object, and said television broadcasting and/or radio broadcasting loop is made at frequencies ranging from 1 second to 120 seconds over very long distances ranging from 500 to 20000 m, said television broadcasting and/or radio broadcasting occurs at a rate of 100 KB/s up to more than 10 GB/s,
--- broadcasting unidirectionally and in broadcast and without dialogue and in loop an image or an avatar of the real object to be detected and attributes associated with the identity of the real object to be detected with the position, the orientation of the object, the direction of movement of the object and the speed of movement of the object to one or more modules called mobile or fixed detection modules and/or radio broadcasting unidirectionally and in broadcast and without dialogue and in a loop sound recordings of the audio description of the real object to be detected and information associated with the identity of the real object to be detected to one or more modules called mobile or fixed detection modules, said detection modules are incorporated or integrated into rolling or flying machines, in autonomous or semi-autonomous rolling or flying machines, in laptops of the PC and smartphone type or are carried by humans and said detection modules are each provided with:
∘ Means for receiving the real or virtual images of the real object to be detected associated with the various attributes of the real object and/or for receiving the sound recordings of the audio description of the real object to be detected and the information associated with the identity of the real object to be detected
o Means for temporarily storing images of the real object to be detected associated with the various attributes of the real object and/or sound recordings of the audio description of the real object to be detected and information associated with the identity of the real object to be detected
∘ Means for displaying or projecting the images of the real object to be detected associated with the various attributes of the real object and/or means for listening to the sound recordings of the audio description of the real object to be detected and information associated with the identity of the real object to be detected and received by the detection module
∘ Means for processing the images of the real object to be detected associated with the various attributes of the real object,
said detection modules connect to one or both of several boxes called real entity boxes with connection times ranging from 2 seconds to 10 minutes and receive the image of the real object to be detected with all information of its identification associated with the position, the orientation of the object, the direction of movement of the object and the speed of movement of the object and display them on the display means equipping the detection modules and/or direct the information on the identity and the other attributes of the real object identified with the position, the orientation of the object, the direction of movement of the object and the speed of movement of the object to the driving and guidance systems of semi-autonomous rolling or flying machines or autonomous rolling or flying machines and/or said detection modules connect to one or both to several boxes called real entity boxes with connection times ranging from 2 seconds to 10 minutes and receive sound information of the audio description of the real object to be detected and information associated with the identity of the real object to be detected with the sound information of the position, the orientation of the object, the direction of movement of the object and the speed of movement of the object and direct them to the sound listening means equipping the detection module and/or direct the information on the identity and the other attributes of the real object identified with the information relative to the position, the orientation of the object, the direction of movement of the object and the speed of movement of the object to the sound information processing systems for the purpose of driving and guiding semi-autonomous rolling or flying machines or autonomous rolling or flying machines.

2. Method according to claim 1, **characterised in that** as part of the transformation of the entity by total substitution, as is the case of advertising panels, signs and pre-signs, the entity is replaced by another entity of natural or synthetic tree type, natural or synthetic flowers with incorporation into the new replacement entity of said real entity box.

3. Method according to claim 1, **characterised in that** in the context of the guidance, self-guiding and driving of autonomous or semi-autonomous machines, the information received by the detection module from the real entity box makes it possible to act on the controls of the machines (steering, acceleration, braking).

4. Method according to claim 1, **characterised in that** it consists of equipping the real entity box with means for detecting the exact position of the object, the orientation of the object, the direction of movement of the object and the speed of movement of the object.

5. Method according to claim 1, **characterised in that** the image processing means of the detection modules communicate with the guidance and driving systems and/or voice recognition means provided with artificial intelligence and for processing the received sound information communicating with the guidance and driving systems of flying or rolling machines.

6. Method according to claim 1, **characterised in that** it consists of equipping the detection module with a timer making it possible to determine the duration of connection of the detection module to the real entity box.

7. Method according to claim 1, **characterised in that** it consists in equipping a road section (163) equipped with detection modules (160a and 160b) placed along the road (163) and separated by a distance and in calculating the speed of a vehicle (69) moving on said road and equipped with a real entity box (62) by determining the duration of the movement of the vehicle (69) between two detection modules.

8. Method according to claim 1, **characterised in that** it consists of:
- Identify all possible movements that the entity could make,
- Associate with each movement that the entity could make a sound or visual description and/or a code,
- Associate with each movement that the entity could make, one or more sensors enabling to detect or measure the movement of the entity,
- Equip the entity with an electronic box called the real entity box containing the sensors associated with all the movements identified and that the entity could do,
- Detect with the help of the sensors the real movement carried out by the entity,
- Broadcast the description and/or the code associated with the movement of the entity detected by the sensors associated with the movement of the entity to a detection module by means equipping the electronic box called real entity box and making it possible to broadcast and/or radio broadcast unidirectionally and in broadcast and without dialogue and in loop the code or the description associated with the movement of the entity and said television broadcasting loop and/or said radio broadcasting loop is made at frequencies ranging from 1 second to 120 seconds over very long distances ranging from 500 m to 20000 m, said television broadcasting and/or radio broadcasting is made at a rate of 100 KB/s up to more than 10 GB/s and said detection module is provided with means for receiving the sound or visual description and/or the code associated with the movement of the entity and said description is broadcast on the sound broadcasting means equipping the detection module or displayed on the means of display equipping the detection module or said code is directed to the operating means for decoding and association with a movement thanks to a database containing the codes associated with each possible feasible movement and said description and/or said code associated with the movement can be used for controlling the driving or auto driving members of the movement of the entity.

9. Device for detecting and identifying a living or non-living entity making it possible to implement the method according to claim 1, wherein the device comprises at least one detectable electronic box called real entity box (42) and at least one detection module (142), the real entity box (42) associates, integrates, is incorporated, partially or not substitutes for the real entity to be detected and identified (48), said real entity box (42) broadcasts unidirectionally and in broadcast and without dialogue and in a loop, a real or virtual image or an avatar of the entity to be detected and information or attributes associated with the identity of the entity, said real entity box (42) has a unique digital identity and comprises:
Digital storing and/or recording means enabling to store a real or virtual image of the entity and/or information or attributes associated with the identity of the entity,
Internal power supply means of the real entity box,
Means for receiving remotely the information associated with the entity,
Means for capturing the real image of the entity with its associated or non-associated environment,
Loop broadcasting means,
--- to one or more mobile or fixed detection modules (142), each provided with:
Means for receiving the data consisting of the images and/or
information broadcast by the real entity box,
Means for temporarily storing said data,
Means for displaying and/or listening to said data,
Data processing means.

10. Device according to claim 9, **characterised in that** the broadcasting is a television broadcasting.

11. Device according to claim 9, **characterised in that** the broadcasting is a radio broadcasting of the sound recordings of an audio description of the entity and information associated with the identity of the real entity to be detected.

12. Device according to claim 9, **characterised in that** the audio description of the real entity is an information or attribute associated with the entity.

13. Device according to claim 9, **characterised in that** the disseminated information or attribute of the entity comprises the position, the orientation, the direction of movement and the speed of movement of the entity.

14. Device according to claim 9, **characterised in that** the digital storing and/or recording means has capacities ranging from 0.1 MB to more than 10 TB.

15. Device according to claim 9, **characterised in that** the power supply means is rechargeable.

16. Device according to claim 9, **characterised in that** the power supply means is connected to external charging means such as solar panels, wind power, magnetic field, piezoelectric or to an electrical network.

17. Device according to claim 9, **characterised in that** the remote reception means range from 500 m to 100,000 km.

18. Device according to claim 9, **characterised in that** it comprises means for transforming the real image of the entity into a virtual image.

19. Device according to claim 10 and/or claim 11, **characterised in that** the television and/or radio broadcasting loop is made at frequencies ranging from 1 second to 120 seconds over very long distances ranging from 500 m to 20,000 m, said television and/or radio broadcasting is made at a rate of 100 Kb/s up to more than 10 Gb/s.

20. Device according to claim 9, **characterised in that** the detection modules are incorporated or integrated in rolling or flying machines, in autonomous or semi-autonomous rolling or flying machines, in laptops such as PCs and smartphones or are worn by humans.

21. Device according to claim 13, **characterised in that** it comprises means for detecting the real position of the object, the orientation of the object, the direction of movement of the object and the speed of movement of the object which consist of GPS sensors, inertial and gyroscopic sensors and accelerometers.

22. Device according to claim 9, **characterised in that** the detection module and/or the real entity box are integrated into backpacks, handbags, suitcases, bicycle and motorcycle helmets with a view to their use by humans.

23. Device according to claim 9, **characterised in that** the detection module and/or the real entity box are constituted by a smartphone modified for the implementation of the new functions of the device managed for example a dedicated application, smartphone with which the driving programs of the rolling vehicles and the safety programs of these vehicles will be compatible.

24. Device according to claim 13, **characterised in that** the data processing means of the detection module communicate with systems for guiding and driving flying or rolling machines.

25. Device according to claim 9, **characterised in that** the detection module comprises a timer for determining the duration of connection of the detection module to the real entity box.
